# EUROPEAN PATENT APPLICATION

(11) **EP 2 515 063 A1**
(43) Date of publication of application: **24.10.2012**
(21) Application number: 09852201.4
(22) Date of filing: 22.12.2009
(51) Int. Cl.: F28D 9/00, F24F 7/08

(54) **SEPARATED COUNTERFLOW AIR HEAT EXCHANGE DEVICE WITH VERTICAL STRUCTURE**

(30) Priority: 16.12.2009 CN 200920278132 U
(71) Applicant: Tonlier Energy Technology (Beijing) Co., Ltd., Beijing 101111 (CN)
(72) Inventor: WANG, Zhen, Beijing 100013 (CN)
(74) Representative: Jeannet, Olivier
(86) International application number: PCT/CN2009/075824
(87) International publication number: WO 2011/072463

(57) **Abstract**

An isolated counter-flow air heat exchanging device with a vertical structure is provided, which includes two heat exchanging cores, four flow dividers, and six air ports. A first flow divider, a first heat exchanging core, a second flow divider, a third flow divider, a second heat exchanging core, and a fourth flow divider are disposed, from top to bottom, inside a main body structure, three air ports (A), (B), and (A') are distributed at one of two parallel sides of the main body structure, and the other three air ports (C), (D), and (C') are distributed at the other side. The first heat exchanging core and the second heat exchanging core are respectively formed with a plurality of heat sink fins, and each heat sink fin has a positive wind channel and a negative wind channel disposed apart from each other. The air heat exchanging device occupies a small floor area. The two heat exchanging cores have large capacity, so the performance of heat exchange is large. Two sets of wind channels connected in parallel reduce the wind resistance, and therefore, power of the required fans is reduced, thereby greatly increasing the energy efficiency ratio.

## Description

### Technical Field

The present invention relates to an air heat exchanging device, in particular, to an isolated counter-flow air heat exchanging device, which has a plurality of isolated wind channels disposed in a heat exchanging core and realizes heat exchange through opposite air flows in the wind channels, and belongs to the field of air conditioning technology.

### Background Art

Along with the development of the society, the number of used conventional air conditioning equipment increases significantly, and a large problem of energy sources is caused. In the 21 st century emphasizing sustainable development issues such as environmental protection, energy-saving, safety, and reliability, how to reduce the energy consumption of the air conditioning equipment has become a common problem for manufacturers and users of the air conditioning equipment.

In the operation of the air conditioning equipment, major energy consumption occurs at the works of cooling or heating. Therefore, the key of reducing the energy consumption of the air conditioning equipment is avoiding using the cooling or heating function as much as possible. On the other hand, a difference between ambient temperatures in and out of the room is large, and if the ambient temperature difference is fully utilized, the using of the cooling or heating function may be effectively reduced. Accordingly, various air heat exchanging devices are developed.

However, the conventional air heat exchanging devices mostly occupy a large floor area, and have disadvantages such as a heat exchanging core having a small capacity, a large wind resistance, and a low energy efficiency ratio. Therefore, the effect of energy saving is undesirable.

SUMMARY OF THE INVENTIONThe present invention is directed to an isolated counter-flow air heat exchanging device with a vertical structure. The air heat exchanging device occupies a small floor area, and is capable of realizing an extremely high energy efficiency ratio.

In order to realize the above objective, the present invention adopts technical solutions as follows.

An isolated counter-flow air heat exchanging device with a vertical structure is provided, which is characterized in that:
the isolated counter-flow air heat exchanging device includes two heat exchanging cores, four flow dividers, and six air ports; in which,
a first flow divider, a first heat exchanging core, a second flow divider, a third flow divider, a second heat exchanging core, and a fourth flow divider are disposed from top to bottom inside a main body structure, three air ports A, B, and A' are distributed at one of two parallel sides of the main body structure, and the other three air ports C, D, and C' are distributed at the other side of the man body structure.

The air port A, the first flow divider, the first heat exchanging core, the second flow divider and the air port B constitute a first wind channel, the air port C, the first flow divider, the first heat exchanging core, the second flow divider and the air port D constitute a second wind channel, the air port D, the third flow divider, the second heat exchanging core, the fourth flow divider and the air port C' constitute a third wind channel, and the air port B, the third flow divider, the second heat exchanging core, the fourth flow divider and the air port A' constitute a fourth wind channel.

The first heat exchanging core and the second heat exchanging core are respectively formed with a plurality of heat sink fins, and each heat sink fin has a positive wind channel and a negative wind channel disposed apart from each other.

The isolated counter-flow air heat exchanging device further includes three fans, and the fans are mounted at the air ports A, D and A' serving as air outlets, or the fans are mounted at the air ports B, C and C' serving as air inlets.

A metal heat conductive wind spacer is disposed between the positive wind channel and the negative wind channel.

Compared with the prior art, in the present invention, a set of air heat exchanger is divided into two sets along a vertical direction, and the two sets are connected in parallel to form an integrated heat exchanger, thereby occupying a small floor area. The two heat exchanging cores have large capacity, so the performance of heat exchange is large. Two sets of wind channels connected in parallel reduce the wind resistance, and therefore, power of the required fans is reduced, thereby greatly increasing the energy efficiency ratio.

### BRIEF DESCRIPTION OF THE DRAWINGS

The utility model will become more fully understood from the detailed embodiments given herein below, with accompanying:

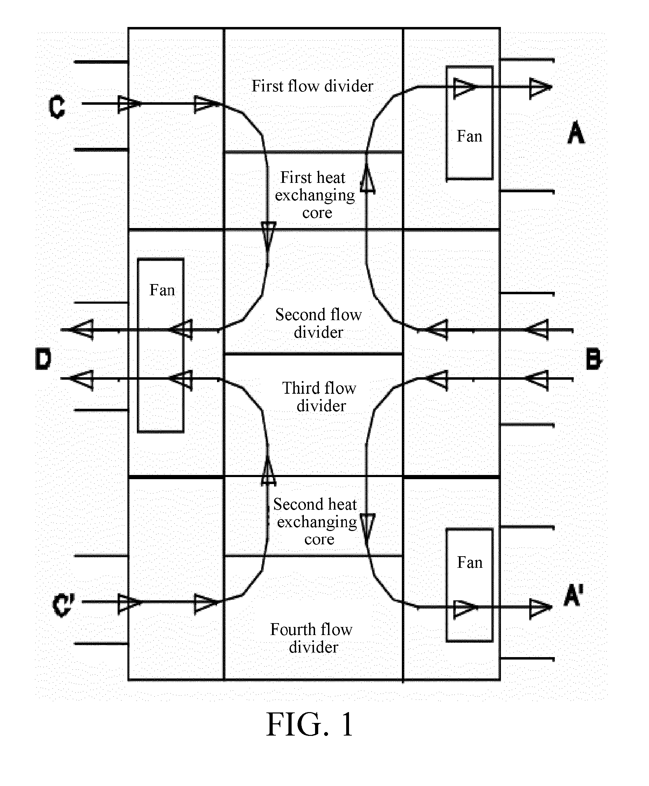

FIG. 1 is a schematic structural view of a main body of an isolated counter-flow air heat exchanging device according to the utility model.

### INTRODUCTION OF DETAILED EMBODIMENTS

As shown in FIG. 1, a main body structure of an isolated counter-flow air heat exchanging device (an air heat exchanging device for short) provided in the present invention is formed with two heat exchanging cores, four flow dividers, three fans, and six air ports along a vertical direction. A first flow divider, a first heat exchanging core, a second flow divider, a third flow divider, a second heat exchanging core, and a fourth flow divider are disposed inside the main body structure from top to bottom. Three air ports are distributed respectively at two sides of the main body structure. Among the air ports, A, A', D are air outlets, B, C, C' are air inlets, and they form four wind channels independent from one another. The air port A, the first flow divider, the first heat exchanging core, the second flow divider and the air port B constitute a first wind channel, the air port C, the first flow divider, the first heat exchanging core, the second flow divider and the air port D constitute a second wind channel, the air port D, the third flow divider, the second heat exchanging core, the fourth flow divider and the air port C' constitute a third wind channel, and the air port B, the third flow divider, the second heat exchanging core, the fourth flow divider and the air port A' constitute a fourth wind channel. For clarity, an air flow from B to A is defined as an air flow I, an air flow from B to A' is defined as an air flow I', an air flow from C to D is defined as an air flow II, and an air flow from C' to D is defined as an air flow II'. Definitely, the air flows I and I' come from the air of the same environment, and are actually in a parallel connection. The air flows II and II' come from the air of another environment, and are actually in a parallel connection.

Each of the two heat exchanging cores is formed with a plurality of heat sink fins. Each heat sink fin has a positive wind channel and a negative wind channel disposed apart from each other, and wind directions in the two wind channels are opposite to each other. A signal heat conductive wind spacer made of metal is disposed between different wind channels, a spacer wall between the wind channels is very thin, and a surface area of a cavity is large (that is, a heat exchange area is large), thereby having a small thermoresistance and a high heat exchange efficiency. In the present invention, the two heat exchanging cores disposed from top to bottom work simultaneously, and are separated from each other. Therefore, resistance in the wind channels is greatly reduced, thereby reducing the operating pressure of the fans, reducing the power required by the fans, and being more advantageous in power saving.

The three fans are respectively mounted at the three air outlets (or mounted at the three air inlets), and are aligned with air vents of the corresponding flow dividers. The air flows II and II' share one air outlet, the two wind channels only require one fan, and in order that the air flows I and I' form an counter flow with the air flows II and II', two fans are required for the air flows I and I'. When the fans operate, the air flow I flows from the port B to the port A, the air flow I' flows from the port B to the port A', the air flow II flows from the port C to the port D, and the air flow II' flows from the port C' to the port D.

The two flow dividers located above and below the heat exchanging core are disposed near the air inlet and the air outlet, and air vents thereof right face the air inlet or the air outlet. The flow divider is used to divide a path of the wind channels into two paths, and divide the air flow I and the air flow II (or the air flow I' and the air flow II') into two different directions.

Assume that the air flows I are I' are outdoor air, and the air flows II and II' are indoor air. A certain temperature difference exist between the indoor air and the outdoor air, and therefore, under the driving of the fans, the air flow I and the air flow II perform heat exchange in the heat exchanging core through the flow divider. During this procedure, cool air is heated, warm air is cooled, and the two flows of air are exhausted to the original environment through another flow divider. During this procedure, the two flows of air are isolated from each other, and pass the heat exchanging core as counter flows, thereby achieving higher heat exchange efficiency. At the same time, the air flow I' and the air flow II' perform the same procedure.

In some ways, the air heat exchanging device of the present invention divides a set of air heat exchanger into two sets, and connects the two sets in parallel along a vertical direction to form an integrated heat exchanger, thereby occupying a small floor area. The two heat exchanging cores have large capacity, so the performance of heat exchange is large. Two sets of wind channels connected in parallel reduce the wind resistance, and therefore, power of the required fans is reduced, thereby greatly increasing the energy efficiency ratio.

The air heat exchanging device of the present invention has the flowing two functions: cooling the indoor hot air by using the outdoor cool air, and reducing heat loss in the indoor air to the outside when introducing outdoor air (fresh air) into the room and exhausting the indoor air to the outside. The air heat exchanging device occupies a small floor area and has a higher energy efficiency ratio, so the air heat exchanging device has a broader application in various fields. For example, the air heat exchange device may be mounted in a machine room to cooperate with air conditioners to cool the machine room; and the air heat exchange device may also be mounted at public places such as office buildings, hotels, and cinemas, so as to perform ventilation in a power saving manner.

The isolated counter-flow air heat exchanging device with a vertical structure is illustrated in details. For those of ordinary skill in the art, any obvious modification on the present invention without departing the spirit of the present invention constitutes an infringement of the patent right of the present invention, and shall bear corresponding legal responsibility.

## Claims

1. An isolated counter-flow air heat exchanging device with a vertical structure, comprising:
two heat exchanging cores, four flow dividers, and six air ports; wherein,
a first flow divider, a first heat exchanging core, a second flow divider, a third flow divider, a second heat exchanging core, and a fourth flow divider are disposed, from top to bottom, inside a main body structure, three air ports (A), (B), and (A') are distributed at one of parallel sides of the main body structure, and the other three air ports (C), (D), and (C') are distributed at the other side of the man body structure;
the air port (A), the first flow divider, the first heat exchanging core, the second flow divider and the air port (B) constitute a first wind channel, the air port (C), the first flow divider, the first heat exchanging core, the second flow divider and the air port (D) constitute a second wind channel, the air port (D), the third flow divider, the second heat exchanging core, the fourth flow divider and the air port (C') constitute a third wind channel, and the air port (B), the third flow divider, the second heat exchanging core, the fourth flow divider and the air port (A') constitute a fourth wind channel; and
the first heat exchanging core and the second heat exchanging core are respectively formed with a plurality of heat sink fins, and each of the heat sink fins has a positive wind channel and a negative wind channel disposed apart from each other.

2. The isolated counter-flow air heat exchanging device according to claim 1, wherein:
the isolated counter-flow air heat exchanging device further comprises three fans, and the fans are mounted at the air ports (A), (D) and (A') serving as air outlets.

3. The isolated counter-flow air heat exchanging device according to claim 1, wherein:
the isolated counter-flow air heat exchanging device further comprises three fans, and the fans are mounted at the air ports (B), (C) and (C') serving as air inlets.

4. The isolated counter-flow air heat exchanging device according to claim 1, wherein:
a metal heat conductive wind spacer is disposed between the positive wind channel and the negative wind channel.
